(19) **Europäisches Patentamt**
**European Patent Office**
**Office européen des brevets**

(11) **EP 1 323 927 B1**

(12) **EUROPEAN PATENT SPECIFICATION**

(45) Date of publication and mention
of the grant of the patent:
**04.03.2009 Bulletin 2009/10**

(51) Int Cl.:
*F04D 27/00* (2006.01)  *F02B 37/12* (2006.01)
*F02D 23/00* (2006.01)  *F02D 33/02* (2006.01)

(21) Application number: **02102690.1**

(22) Date of filing: **05.12.2002**

(54) **Method for controlling a compressor of a turbocharger**

Verfahren zur Regelung des Verdichters eines Turboladers

Procédé pour le contrôle d'un compresseur d'un turbocompresseur

(84) Designated Contracting States:
**DE FR IT**

(30) Priority: **21.12.2001 LU 90868**

(43) Date of publication of application:
**02.07.2003 Bulletin 2003/27**

(73) Proprietor: **Delphi Technologies, Inc.**
**Troy, MI 48007 (US)**

(72) Inventors:
- **BARTHELET, Pierre**
  **6791, ATHUS (BE)**
- **GHEZZI, Olivier**
  **57330 Hettange-Grande (FR)**
- **VONCKEN, Claude**
  **5954, ITZIG (LU)**

(74) Representative: **Robert, Vincent et al**
**Delphi European Headquarters**
**64, Avenue de la Plaine de France**
**Paris Nord II**
**BP 65059 Tremblay-en-France**
**95972 Roissy Charles de Gaulle Cedex (FR)**

(56) References cited:
EP-A- 0 685 652      US-A- 3 868 625
US-B1- 6 324 848

- **PATENT ABSTRACTS OF JAPAN vol. 006, no. 125 (P-127), 10 July 1982 (1982-07-10) & JP 57 052838 A (AUTOMOB ANTIPOLLUT & SAF RES CENTER), 29 March 1982 (1982-03-29)**
- **PATENT ABSTRACTS OF JAPAN vol. 013, no. 582 (M-911), 21 December 1989 (1989-12-21) & JP 01 244115 A (TOYOTA MOTOR CORP), 28 September 1989 (1989-09-28)**
- **PATENT ABSTRACTS OF JAPAN vol. 1995, no. 02, 31 March 1995 (1995-03-31) & JP 06 323147 A (TOCHIGI FUJI IND CO LTD), 22 November 1994 (1994-11-22)**

## Description

### Field of the invention

The present invention generally relates to a method for controlling a compressor of a turbocharger.

### Background of the invention

An exhaust-gas turbocharger generally consists of a turbine and a compressor installed on a single shaft. The turbine uses the energy of the exhaust-gases to drive the compressor.. The compressor, in turn, draws in fresh air, which it supplies to the engine cylinders in compressed form.

Under certain circumstances, compressor surging may occur Surging is the aerodynamic instability occurring in the compressor airflow and is linked to the boundary layer detaching from the compressor wheel blade. This phenomenon will lead to pressure waves on the compressor side that can excite the turbocharger in axial direction, possibly leading to thrust bearing damage as well as being a source of audible noise

Typically, turbochargers are sized for an engine in such a way that surge does not occur under any normal operating conditions. However, a severe intake restriction or operation at low atmospheric pressure such as at high altitude are two possible causes of surge in a compressor that normally operates nowhere near the surge zone..

In order to improve turbocharger control, a method for detecting compressor surging needs to be developed.

EP 0 685 652 relates to a method for determining an index of an onset of surge by a computational process of the vibrational amplitude associated with surge that is applicable to centrifugal and mixed flow plumps, blowers and compressors.

JP 57-052838 relates to a method for detecting surge of a supercharger based on the compressor inlet pressure signal. The signal is injected into comparators to detect small or large pulsation.

JP 06-323147 and US 6,324,848 are also concerned with avoiding surge in the compressor of a turbo-/supercharged engine.

### Object of the invention

The object of the present invention is to provide an alternative method for controlling the boost pressure of a turbocharged internal combustion engine, which uses such surge detection

### Summary of the invention

The above problem is solved by a method for controlling the boost pressure of an internal combustion engine with exhaust-gas turbocharger as claimed in claim 1"

The turbocharger comprises a turbine connected to a compressor in communication with an air intake line, The present method advantageously employs a surge detection process that comprises the following steps:

a) measuring a surge-influenced parameter by means of a sensor generating a first signal;

b) processing the first signal to obtain a second signal, which essentially comprises the surge-specific components of the first signal;

c) concluding to the occurrence of compressor surging if the amplitude of said second signal exceeds a predetermined threshold.

Hence, in the present method, the surge-specific components of the first signal generated by the sensor are extracted therefrom, to form the second signal which is then essentially representative of the surge phenomenon. Then, the amplitude of this second signal is evaluated to determine whether surge is present or not. It shall be appreciated that the present method allows to detect surge with high accuracy and reliability, since the intensity of the surge phenomenon is evaluated from a signal (i.e.. the second signal), which is essentially representative of this particular phenomenon, and which is thus not perturbed by variations of the measured parameter that are not related to surging.

It shall further be appreciated that it has been observed that compressor surging generally leads to oscillations in compressor flows and internal pressure. Therefore, the surge-influenced parameter shall advantageously be one of the flow rate of intake air or the pressure in the intake line. The term intake line herein generally designates the assembly of elements guiding the fresh air to the cylinders, upstream and downstream of the compressor. To determine the air flow rate or the air pressure in the intake line, the use of sensors which are generally already required for other tasks by the engine control unit is preferred, for obvious costs reasons For example, a flow rate sensor is generally installed upstream of the compressor in engines equipped for exhaust gas recirculation.. Besides, a pressure sensor is installed in the intake manifold to measure the intake manifold pressure for controlling the boost pressure

In a preferred embodiment, the intake air flow rate is used as the surge-influenced parameter in fact, it has been observed that surging causes the air flow to oscillate at the resonance frequency of the air intake line. Hence, in step (b), the first signal is preferably processed in such a way as to obtain a second signal essentially comprising the frequency components corresponding to the resonance frequency of the air intake line. The air flow rate is advantageously measured upstream of the compressor, e.g by means of the flow meter that is generally provided between the air filter and the compressor for exhaust-gas recirculation control.

Referring more specifically to the signal processing of step b), the first signal is preferably injected into a band pass filter so as to pass therethrough only the surge-specific frequency components of the first signal. This allows to obtain a signal that is essentially representative of the surge phenomenon, based on which the intensity of the surge phenomenon can be determined. This is particularly adapted for treating either signals generated by a pressure sensor or a flow meter, since surging causes air flow and pressure to oscillate.

The filtered signal obtained from the band pass filter is advantageously normalized to facilitate its evaluation. This is preferably done by converting the filtered signal into absolute value and then further passing the converted signal through a low pass filter. Indeed, the conversion into absolute value simplifies the signal processing in that negative signal portions are eliminated. The first order filtering results in a general smoothening of the signal, thereby attenuating interferences.

It will be appreciated that the use of electronic surge detection in a method for controlling the boost pressure of a turbocharged engine allows to exactly detect if the compressor of the turbocharger is operated in the surge mode, and to take appropriate corrective measures, which shall result in a reduction in intake manifold pressure (i.e., the boost pressure) to reduce and finally suppress surging. The present method can advantageously be implemented with boost pressure control methods that already integrate a surge-preventive control logic. This permits to verify that the surging is indeed not occurring, and in case surging would arise in spite of the surge-preventive control logic, to take the compressor out of surging..

The intake manifold pressure is controlled in such a way that the pressure ratio (i.e. outlet pressure over inlet pressure) in the compressor of the exhaust-gas turbocharger does not exceed a maximum pressure ratio, which depends on a parameter representative of the air flow rate through the compressor. If compressor surging is detected, the maximum pressure ratio is reduced-thereby reducing the intake manifold pressure-to stop surging. As a matter of fact, surging appears above different pressure ratios, depending on the quantity of air flowing through the compressor Therefore, by using a maximum pressure ratio that depends on a parameter representative of the air flow through the compressor, the present method allows to control the boost pressure in function of the actual capabilities of the turbocharger.

Based on the maximum compressor ratio, a maximum boost pressure allowable in the intake manifold pressure is determined. This maximum boost pressure will then depend on the air flow through the compressor, and on the ambient air pressure, which influences the compressor inlet pressure. This is a major advantage with regard to the conventional methods, wherein a conservative limitation on boost pressure is applied, irrespective of the airflow through the compressor.

It is to be noted that in case the current maximum pressure ratio used to protect the turbocharger from surging is too high and surging arises, the surge condition will be readily detected and the maximum pressure ratio reduced.

The parameter representative of the air flow through the engine may be the mass flow rate of fresh air measured in the intake line of the engine, However, rather than the mass flow rate, the corrected mass flow rate is more preferably used as the parameter representative of the flow rate through the engine. Such a corrected mass flow rate corresponds to the measured mass flow rate, corrected with regard to reference temperature and pressure These reference temperature and pressure will generally be about 20°C and sea level atmospheric pressure (about 1 bar) Using the corrected mass flow rate allows to take into account the air pressure and temperature in the determination of the maximum pressure ratio.

Furthermore, it will be appreciated that in case the compressor operates at maximum pressure ratio and no surging is detected during a given period of time, the maximum pressure ratio is increased.

Preferably; the maximum pressure ratio is not directly updated, but indirectly by use of a pressure ratio offset, which also depends on the parameter representative of the air flow through the compressor Accordingly, the maximum pressure ratio corresponds to the sum of a limit pressure ratio and of the pressure ratio offset, the pressure ratio offset being updated in such a way as to obtain an increase or decrease of maximum pressure ratio, as the case may be

The values of limit pressure ratio will be advantageously chosen in such a way as to be in the stable operating range of the compressor for the corresponding air flow, as close as possible to the limits with the instable compressor operating ranges (i.e. surge and overspeed), possibly including safety margins. The pressure ratio offset permits to adjust the maximum pressure ratio with respect to the predetermined limit pressure ratio, in function of the real operating conditions of the turbocharger. This allows to operate the turbocharger very close to the surge limit, thereby increasing performances.

According to another preferred embodiment, the present method comprises a closed-loop regulation having as input parameter the intake manifold pressure and a desired boost pressure. The method further comprises the steps of:

- reading out a reference boost pressure from a reference map based on engine speed and engine load;

- determining an upstream compressor pressure and the parameter representative of the air flow rate through the compressor;

- reading out a limit compressor pressure ratio from a limit pressure ratio map in function of the parameter representative of the air flow rate through the engine and reading out a pressure ratio offset from a pressure ratio offset table in function of the parameter representative of the air flow rate through the engine, and calculating a maximum pressure ratio by adding the limit pressure ratio to the pressure ratio offset;

- determining a maximum boost pressure based on the maximum pressure ratio and the upstream compressor pressure; and

- using the lesser of the reference boost pressure and the limit boost pressure as the desired boost pressure.

It shall be appreciated that, in case of surging, the pressure ratio offset is updated in such a way that the maximum pressure ratio is decreased. Furthermore, in case the limit boost pressure is used as the desired boost pressure and no surging is detected during a given period of time, the pressure ratio offset is updated in such a way as to increase the maximum pressure ratio.

Such an embodiment thus allows to limit the boost pressure of a turbocharged engine in such a way that the pressure ratio in the compressor does not exceed a maximum pressure ratio. The maximum pressure ratio comprises a constant term, which is selected so as to ensure that the compressor remains in the stable operating range. In addition, the maximum pressure ratio comprises an updatable term, which allows to adjust the maximum pressure ratio with regard to the actual surge limit, that is detected electronically. In other words, the method is capable of learning by itself the actual surge limit of the compressor.

It remains to be noted that the methods described hereinabove are applicable to all types of exhaust-gas turbochargers.

### *Brief description of the drawings*

The present invention will now be described, by way of example, with reference to the accompanying drawings, in which:

Fig.1: is a typical compressor map of an exhaust-gas turbocharger;

Fig.2: is a graph illustrating a part of the signal representing the air flow in the intake line, which is influenced by surging;

Fig.3: is a graph showing the spectral distribution of the signal part of Fig.2;

Fig.4: is a graph of the raw signal generated by the flow meter;

Fig.5: is a graph of the filtered signal of Fig.4;

Fig.6: is a graph representing the raw signal of Fig.2 and indicating the occur- rence of surge;

Fig.7: is a block diagram illustrating a preferred embodiment of a method for controlling the boost pressure of a turbocharged engine.

### *Detailed description of a preferred embodiment*

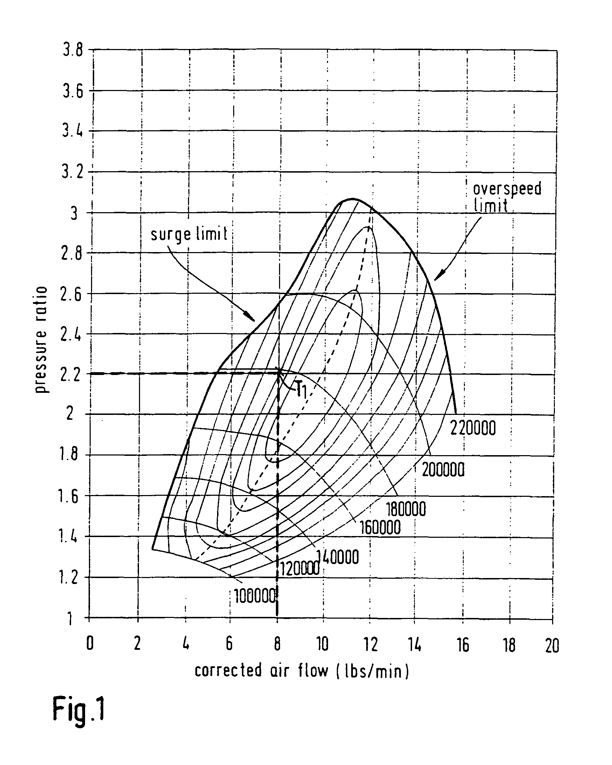

Fig.1 shows a typical compressor map of an exhaust-gas turbocharger. The pressure ratio, i.e. compressor outlet pressure over compressor inlet pressure, is plotted against the air flow rate passing through the compressor. More exactly, the graduations on the horizontal axis indicate the corrected mass flow rate $W^*$ of air, which corresponds to the air mass flow rate W corrected with regard to a reference temperature $T_{REF}$ and a reference pressure $P_{REF}$, according to the following formula:

$$W^* = W \frac{P_{REF}}{P_{IN}} \sqrt{\frac{T_{IN}}{T_{REF}}}$$

The parameters $T_{IN}$ and $P_{IN}$ represent the pressure and temperature of air at the compressor inlet. The reference temperature $T_{REF}$ lies in the range of ambient temperatures and the reference pressure $P_{REF}$ about sea level pressure. On the graph of Fig.1, the corrected air mass flow rate $W^*$ is given in lbs/min.

There are two sets of curves on the graph: efficiency curves (of oval shape) and compressor wheel rotating speed curves (rotating speed is indicated next to each curve). The area where there are lines drawn is the operating envelope. It is best to operate the compressor within this envelope. The thick line partially enclosing the operating envelope indicates, to the left, the surge limit, and to the right, the over-speed limit.

In an internal combustion engine equipped with an exhaust-gas turbocharger, the boost pressure is generally controlled in closed-loop by the Engine Control Unit (ECU) based on a comparison between a desired boost pressure and an intake manifold air pressure. In the case of turbochargers including a governing mechanism such as e.g. a multi-vane diffuser or a waste gate, the ECU operates the governing mechanism in such a way that the intake manifold air pressure reaches the desired boost pressure.

Supposing that for given engine speed and load, the required boost pressure, i.e. the intake manifold pressure, is 2.2 bars. In approximation, without considering pressure losses in the intake line, while driving at sea level (atmospheric pressure about 1 bar), the pressure ratio in the compressor amounts to 2.2. If in this case the mass air flow rate in the compressor is 8 lbs/min, it means that the compressor operates in the stable range: the corresponding operating point $T_1$ is shown on the graph in Fig.1.

From the definition of the pressure ratio, it is clear that for a given compressor outlet pressure, a decrease of compressor inlet pressure will cause an increase of the pressure ratio. Hence, a decrease of atmospheric pressure, e.g. due to driving in altitude, will cause an upward shift of the operating point for a same outlet pressure than at sea level. Referring again to the above example of a boost pressure demand of 2.2 bars, if the car was driven at an altitude of 1 500 m (atmospheric pressure about 0.85 bar), the pressure ratio would amount to about 2.6. As can be seen from the compressor map, this would cause the compressor to surge, since the point corresponding to a pressure ratio of 2.6 and a corrected mass flow rate $W^*$ of 8 lbs/min is above the surge limit.

According to a first aspect of the present invention, a preferred embodiment of a method for detecting surging of a turbocharger will now be described in detail. As already explained, it has been observed that surging causes the air flow through the compressor to oscillate at the resonance frequency of the air intake line. This causes oscillations in compressor flows and internal pressures, and thus has an influence on parameters such as the air flow rate through the compressor and the pressures in the intake line. In the present embodiment, surge detection is carried out by measuring the air flow rate by means of a flow meter installed in the air intake line, e.g. between the air filter and the compressor.

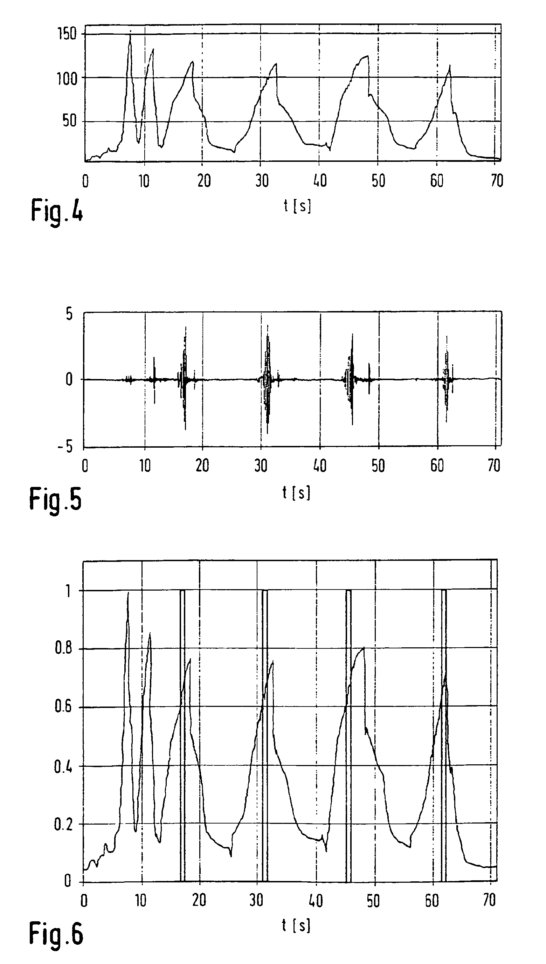

Fig.4 shows an example of a raw signal delivered by the flow meter, the intensity of the measured air flow rate being plotted versus time (in seconds). The jagged_variations of the signal are representative of the variations of the air flow rate linked to engine accelerations and decelerations.

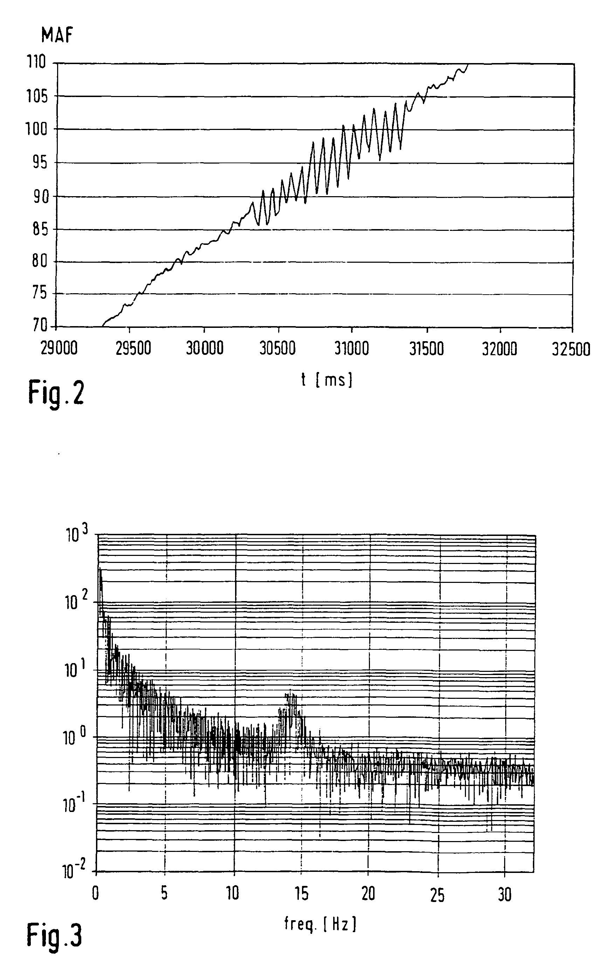

Fig.2 is a zoom of a part of the raw signal of Fig. 4, where the air flow rate through the compressor is influenced by the surge phenomenon. Indeed, the signal oscillations between 30 250 and 31 250 ms are due to surging. Turning now to Fig.3 (intensity vs. frequency), the spectral distribution of the signal portion of Fig.2 is shown. As can be seen, there is a peak about 14 Hz.

According to the present method, the raw signal delivered by the flow meter is processed in such a way as to obtain a signal, which essentially comprises the surge-specific components of the raw signal. From Fig. 3, it has been established that surging causes air flow rate oscillations at the frequency of about 14 Hz.

Therefore, in the present embodiment, the raw signal generated by the flow meter is advantageously processed by a band pass filter so as to pass therethrough only the surge-specific frequency components of the raw signal, i.e. the frequencies about 14 Hz. Hence, the resulting filtered signal is essentially representative of the surge effect. This is illustrated in Fig.5, which shows the filtered signal obtained by processing the raw signal of Fig.2 with such a band pass filter. As can be seen, there is an intense variation of amplitude of the filtered signal about 31 seconds, which corresponds to the formerly identified surge influenced part of the raw signal (Fig.2).

Such a filtered signal permits an accurate and reliable signal evaluation to determine if surging is present or not. According to the present method, the amplitude of the filtered signal is compared to a surge threshold, and it is concluded to the occurrence of surge if the amplitude of the filtered signal exceeds the surge threshold.

The result of this comparison is shown in Fig. 6, where the measured air flow rate signal of Fig.2 and a so-called surge index, which is a binary indicator of the occurrence of surge, are shown in the same graph. When comparing Figs. 5 and 6, it can be seen that for the larger amplitudes in the filtered signal of Fig.5, the occurrence of surge is indicated by a surge index of 1.0. For the smaller variations of amplitude, which are inferior to the surge threshold, it has not been concluded to the occurrence of surge, and the surge-index remained at 0.

It remains to be noted that before comparing the filtered signal obtained from the band pass filter, the signal is preferably converted into absolute value, and subsequently passed through a first order low pass filter. This allows a normalization of the signal, which simplifies its processing since negative values are eliminated and its peak values are smoothened.

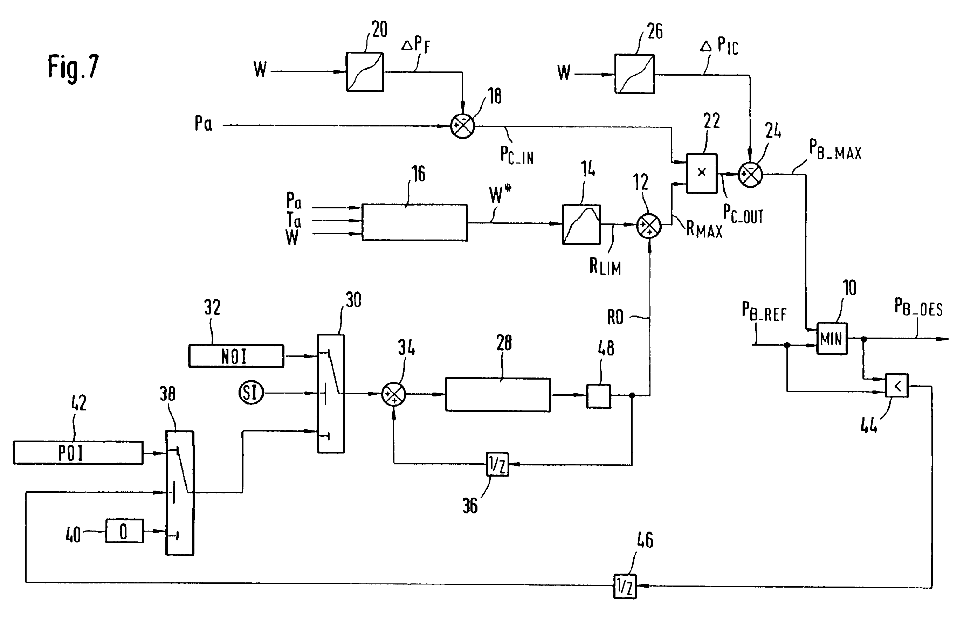

Such a method for detecting compressor surging can advantageously be used in methods for controlling the boost pressure of turbocharged engines. A preferred embodiment of a method for controlling the boost pressure (second aspect of the invention), using electronic surge detection, will now be described in detail, with regard to Fig.7.

It shall be appreciated that, to protect the turbocharger from surging and over-speeding due to variations in ambient conditions, the present embodiment proposes to control the boost pressure in such a way that the compressor pressure ratio does not exceed a maximum pressure ratio, which depends on a parameter representative of the air flow rate through the compressor.

As already mentioned, surging or over-speeding appear above different pressure ratios, depending on the quantity of air flowing through the compressor. Therefore, limiting the intake manifold pressure in function of a flow-dependent maximum pressure ratio allows to take into account the actual capabilities of the turbocharger in the boost pressure control.

The parameter representative of the air flow through the engine preferably is the corrected mass flow rate of fresh air in the intake line, since it takes into account the ambient temperature and pressure.

It shall further be appreciated that the present embodiment uses electronic surge detection, and takes advantage of this surging information to update the maximum pressure ratio. More precisely, the maximum pressure ratio is decreased in case surging is detected. In addition, in case the compressor is operated at the maximum pressure ratio for during a given period of time and no surging is detected, the maximum pressure ratio is preferably increased.

So, generally speaking, the present method consists in controlling the boost pressure so as not to exceed a maximum pressure ratio, which depends on the corrected mass flow rate of fresh air, wherein the maximum pressure ratio is updated in certain conditions.

As mentioned above, boost pressure control is generally carried out in closed loop based on a comparison between the intake manifold pressure (i.e. the actual boost pressure) and a desired boost pressure (i.e. the target boost pressure).

Turning now to Fig.7, it shows a block diagram illustrating how such a desired boost pressure $P_{B\_DES}$ is determined in accordance with the present preferred embodiment. In fact, the desired boost pressure $P_{B\_DES}$ results from a comparison at 10 between a reference boost pressure $P_{B\_REF}$ and a maximum boost pressure $P_{B\_MAX}$, wherein the lesser of these two pressures is assigned as the desired boost pressure $P_{B\_DES}$. This means that the limitation of boost pressure by assigning the maximum boost pressure $P_{B\_MAX}$ as the desired boost pressure $P_{B\_DES}$ will only occur in case the reference boost pressure $P_{B\_REF}$ is superior to this maximum boost pressure $P_{B\_MAX}$.

The reference boost pressure $P_{B\_REF}$ is read out from a reference map (not shown) in function of engine speed and load, and corresponds to the boost pressure required to achieve desired engine performance at normal atmospheric pressures (generally about sea level).

On the other hand, the maximum boost pressure $P_{B\_MAX}$ is determined from the maximum pressure ratio $R_{MAX}$ and corresponds to the maximum allowed pressure in the intake manifold for not exceeding the maximum pressure ratio $R_{MAX}$.

Referring more specifically to the maximum pressure ratio $R_{MAX}$, it will be appreciated that it results from the addition (adder 12) of a limit pressure ratio $R_{LIM}$ and of a pressure ratio offset RO, which both depend on the corrected mass flow rate $W^*$.

The limit pressure ratio $R_{LIM}$ is read out from a limit pressure ratio map 14 in function of the corrected air flow rate $W^*$. The corrected air flow rate is calculated at 16 using the above mentioned formula, from the measured air flow rate W, and atmospheric pressure Pa and from the temperature Ta of intake air measured in the intake line. The limit pressure ratio map 14 is build from the compressor map. The values of limit pressure ratio $R_{LIM}$ will preferably be selected to be relatively close to the separating line (thick line in the compressor map in Fig.1) delimiting the surge and over-speed zones from the stable operating range.

Regarding the pressure ratio offset RO, it is in fact a corrective term, which allows to adjust the maximum pressure ratio, as will be explained later.

Upon determination of the maximum pressure ratio $R_{MAX}$ the maximum boost pressure $P_{B\_MAX}$ can be calculated. A rough approximation of the maximum boost pressure $P_{B\_MAX}$ would be to calculate the latter as the product of the maximum pressure ratio $R_{MAX}$ and the atmospheric pressure Pa. However, to obtain an accurate value of the maximum boost pressure $P_{B\_MAX}$, pressure losses in the intake line are also taken into account in its determination.

A first cause of pressure loss generally is the air filter upstream of the compressor. Therefore, the compressor inlet pressure is estimated as the difference between atmospheric pressure Pa and an estimated pressure loss in the air filter $\Delta P_F$: $P_{C\_IN}=Pa - \Delta P_F$. This is represented by subtractor 18, which receives the measured atmospheric pressure Pa and the estimated pressure loss in the air filter $\Delta P_F$, which is read out from a map 20 in function of the measured air flow rate W.

The compressor outlet pressure $P_{C\_OUT}$ is then calculated by multiplier 22, as the product of the compressor inlet pressure $P_{C\_IN}$ and the maximum pressure ratio $R_{MAX}$.

The maximum boost pressure $P_{B\_MAX}$ is finally obtained by subtracting (24) the compressor outlet pressure $P_{C\_OUT}$ to the pressure loss in the inter-cooler ($\Delta P_{IC}$) that is generally provided between the turbocharger and the intake manifold: $P_{B\_MAX} = P_{C\_OUT} - \Delta P_{IC}$. The pressure loss in the inter-cooler $\Delta P_{IC}$ is read out from a map 26 in function of the measured air flow rate W.

Referring now more specifically to the pressure ratio offset RO, it has, as mentioned, an adjustment or corrective purpose. It will be noted that the maximum pressure ratio $R_{MAX}$ results from the addition in adder 12 of the limit pressure ratio $R_{LIM}$ and the pressure ratio offset RO. It means that to decrease the maximum pressure ratio $R_{MAX}$ it is necessary to add a negative pressure ratio offset. As for the limit pressure ratio $R_{LIM}$, the pressure ratio offset depends on the corrected mass air flow rate $W^*$ in the compressor. The values of the pressure ratio offset are stored in a table 28 in function of the corrected mass air flow rate $W^*$. The update of the pressure ratio offset RO is carried out as follows.

Reference sign 30 indicates a switch having as input parameter a binary surge indicator SI, which may be controlled by the method in accordance with the first aspect of the invention. In case surging is detected, the surge indicator SI activates the switch, which generates a negative offset increment NOI (32). The switch 30 is linked to adder 34, which also receives the value of the pressure ratio offset at the precedent iteration of the method, indicated by 1/z (36). As can be seen in Fig.7, the pressure value offset resulting from adder 34 is stored in the table 28 in function of the corrected mass flow rate $W^*$. The new updated pressure ratio offset is thus more negative than the precedent, due to the addition of the negative offset increment, whereby the maximum pressure ratio will be reduced. It will be understood that the pressure ratio offset will be incremented in this way as long as the surge indicator indicates the presence of surge.

If no surge is detected, the value delivered by switch 30 to adder 34 is that which arrives at its lower terminal in Fig.7. This value depends on another switch 38, and is either 0 (40) or a positive offset increment POI (42), depending on whether switch 38 is activated or not. As a matter of fact, the activation of switch 38 is linked to the values of the desired boost pressure $P_{B\_DES}$ and the reference boost pressure $P_{B\_REF}$. Box 44 indicates that in case the desired boost pressure $P_{B\_DES}$ differs from the reference boost pressure, which means that the desired boost pressure equals the maximum boost pressure and thus that the compressor operates at the maximum pressure ratio, then the desired boost pressure in the preceding iteration is retrieved (46) and applied at the input of switch 38. If the pressure at the input of switch 38 equals the maximum boost pressure $P_{B\_MAX}$, then the switch 38 delivers a positive signal increment POI, otherwise, the value delivered by switch 38 is 0.

It is to be noted that box 48 indicates that a safety limitation of the pressure offset ratio is made, which consists in limiting the maximum value of the pressure ratio offset, so that the maximum pressure ratio offset cannot be increased above a given limit. Such a limitation is preferably done in function of the air flow rate.

As a result, the present method allows to limit the boost pressure of a turbocharged engine in such a way that the pressure ratio in the compressor does not exceed a maximum pressure ratio. The maximum pressure ratio comprises a constant term, which is selected so as to operate the compressor in the stable operating range. In addition, the maximum pressure ratio comprises an updatable term, which allows to adjust the maximum pressure ratio with regard to the actual surge limit, that is detected electronically. In other words, the method is capable of learning by itself the surge limit.

**Claims**

1. A method for controlling the boost pressure of an internal combustion engine including an exhaust-gas turbocharger, said turbocharger comprising a turbine connected to a compressor in communication with an air intake line, wherein the compressor outlet is connected to an intake air manifold, the latter being controlled in such a way that the pressure ratio in the compressor of said exhaust-gas turbocharger does not exceed a maximum pressure ratio, which depends on a parameter representative of the air flow rate through the compressor, said method comprising:

    monitoring a surge-influenced parameter so as to detect compressor surging;
    in case of compressor surging, reducing the intake manifold pressure to suppress surging; and
    in case said compressor operates at said maximum pressure ratio and no surging is detected during a given period of time, said maximum pressure ratio is increased.

2. The method according to claim 1, **characterized in that** compressor surging is detected by means of a method comprising:

    a) measuring a surge influenced parameter by means of a sensor generating a first signal;
    b) processing said first signal to obtain a second signal which essentially comprises the surge-specific components of said first signal;
    c) concluding to the occurrence of compressor surging if the amplitude of said second signal exceeds a predetermined threshold.

3. The method according to claim 2, **characterized in that** said surge influenced parameter is the flow rate of intake air.

4. The method according to claim 2, **characterized in that** said surge-influenced parameter is the air pressure in said air intake line.

5. The method according to claim 2, 3 or 4, **characterized in that** at step b) said first signal is processed by a band pass filter so as to pass therethrough only the surge-specific frequency components of said first signal.

6. The method according to claim 5, **characterized in that** at step b), said second signal is obtained by normalizing said filtered signal.

7. The method according to claim 6, **characterized in that** said normalization comprises converting said filtered signal into absolute value and subsequently passing it through a low pass filter.

8. The method according to any one of the preceding claims, **characterized in that** said maximum pressure ratio corresponds to the sum of a limit pressure ratio depending on said parameter representative of the air flow rate and of a pressure ratio offset depending on said parameter representative of the air flow rate, said pressure ratio offset being updated in such a way as to obtain an increase or decrease of said maximum pressure ratio.

9. The method according to claim 8, **characterized in that** it comprises a closed-loop regulation having as input parameter the intake manifold pressure and a desired boost pressure; and **in that** said method comprises the steps of:

    reading out a reference boost pressure from a reference map based on engine speed and engine load;
    determining an upstream compressor pressure and said parameter representative of the air flow rate through the compressor;

reading out said limit compressor pressure ratio from a limit pressure ratio map in function of said parameter representative of the air flow rate through the engine and reading out said pressure ratio offset from a pressure ratio offset table in function of said parameter representative of the air flow rate through the engine, and calculating said maximum pressure ratio by adding said limit pressure ratio to said pressure ratio offset;

determining a maximum boost pressure based on said maximum pressure ratio and said upstream compressor pressure; and

using the lesser of said reference boost pressure and said limit boost pressure as the desired boost pressure;

wherein

in case of surging, said pressure ratio offset is updated in such a way that said maximum pressure ratio is decreased; and

in case said limit boost pressure is used as said desired boost pressure and no surging is detected during a given period of time, said pressure ratio offset is updated in such a way as to increase said maximum pressure ratio.

10. The method according to claim 9, **characterized in that** each update of said pressure ratio offset is stored in said pressure ratio offset table.

11. The method according to any one of claims any one of the preceding claims, **characterized in that** said parameter representative of the air flow rate through the compressor is the mass flow rate or corrected mass flow rate of air through the compressor, or engine speed.

**Patentansprüche**

1. Verfahren zum Regeln des Ladedrucks einer Verbrennungskraftmaschine mit einem Abgasturbolader, wobei der genannte Turbolader eine Turbine aufweist, die mit einem Verdichter verbunden ist, der mit einer Luftansaugleitung kommuniziert, wobei der Verdichterauslass mit einem Ansaugluftkrümmer verbunden ist, wobei Letzterer so gesteuert wird, dass das Druckverhältnis im Verdichter des genannten Abgasturboladers ein maximales Druckverhältnis nicht übersteigt, das von einem Parameter abhängt, der für den Luftdurchsatz durch den Verdichter repräsentativ ist, wobei das genannte Verfahren Folgendes umfasst:

Überwachen eines pumpstoßbeeinflussten Parameters, um Verdichterpumpen zu erkennen;
Senken, im Fall von Verdichterpumpen, des Ansaugkrümmerdrucks zum Unterdrücken von Pumpen und
Erhöhen des genannten maximalen Druckverhältnisses in dem Fall, dass während einer vorgegebenen Zeitspanne der genannte Verdichter mit dem genannten maximalen Druckverhältnis betrieben wird und kein Pumpen erkannt wird.

2. Verfahren nach Anspruch 1, **dadurch gekennzeichnet, dass** Verdichterpumpen mithilfe eines Verfahrens erkannt wird, das Folgendes umfasst:

a) Messen eines pumpstoßbeeinflussten Parameters mit Hilfe eines Sensors, der ein erstes Signal erzeugt;
b) Verarbeiten des genannten ersten Signals, um ein zweites Signal zu erhalten, das im Wesentlichen die pumpstoßspezifischen Komponenten des genannten ersten Signals umfasst;
c) Schlussfolgern, dass Verdichterpumpen stattfindet, wenn die Amplitude des genannten zweiten Signals einen vorbestimmten Schwellenwert übersteigt.

3. Verfahren nach Anspruch 2, **dadurch gekennzeichnet, dass** der genannte pumpstoßbeeinflusste Parameter der Ansaugluftdurchsatz ist.

4. Verfahren nach Anspruch 2, **dadurch gekennzeichnet, dass** der genannte pumpstoßbeeinflusste Parameter der Luftdruck in der genannten Luftansaugleitung ist.

5. Verfahren nach Anspruch 2, 3 oder 4, **dadurch gekennzeichnet, dass** in Schritt b) das genannte erste Signal von einem Bandpassfilter verarbeitet wird, um nur die pumpstoßspezifischen Frequenzkomponenten des genannten ersten Signals durch es durchzulassen.

6. Verfahren nach Anspruch 5, **dadurch gekennzeichnet, dass** an Schritt b) das genannte zweite Signal durch Normalisieren des genannten gefilterten Signals erhalten wird.

7. Verfahren nach Anspruch 6, **dadurch gekennzeichnet, dass** das genannte Normalisieren das Umwandeln des genannten gefilterten Signals in einen absoluten Wert und sein anschließendes Hindurchführen durch einen Tiefpassfilter umfasst.

8. Verfahren nach einem der vorhergehenden Ansprüche, **dadurch gekennzeichnet, dass** das genannte maximale Druckverhältnis der Summe eines Grenzdruckverhältnisses, das von dem genannten Parameter abhängt, der für den Luftdurchsatz repräsentativ ist, und eines Druckverhältnisoffsets entspricht, der von dem genannten Parameter abhängt, der für den Luftdurchsatz repräsentativ ist, wobei der genannte Druckverhältnisoffset auf eine solche Weise aktualisiert wird, dass man eine Erhöhung oder Verringerung des genannten maximalen Druckverhältnisses erhält.

9. Verfahren nach Anspruch 8, **dadurch gekennzeichnet, dass** es eine Regelung im geschlossenen Kreis umfasst, die als Eingabeparameter den Ansaugkrümmerdruck und einen Soll-Ladedruck hat, und **dadurch**, dass das genannte Verfahren die folgenden Schritte umfasst:

  Auslesen eines Referenzladedrucks aus einem auf Motordrehzahl und Motorlast basierenden Referenzkennfeld;
  Ermitteln eines Stromaufwärtsverdichterdrucks und des genannten Parameters, der für den Luftdurchsatz durch den Verdichter repräsentativ ist;
  Auslesen des genannten Grenzverdichterdruckverhältnisses aus einem Grenzdruckverhältniskennfeld in Abhängigkeit von dem genannten Parameter, der für den Luftdurchsatz durch den Motor repräsentativ ist, und Auslesen des genannten Druckverhältnisoffsets aus einer Druckverhältnisoffsettabelle in Abhängigkeit von dem genannten Parameter, der für den Luftdurchsatz durch den Motor repräsentativ ist, und Berechnen des genannten maximalen Druckverhältnisses durch Addieren des genannten Grenzdruckverhältnisses zu dem genannten Druckverhältnisoffset;
  Ermitteln eines maximalen Ladedrucks auf der Basis des genannten maximalen Druckverhältnisses und des genannten Stromaufwärtsverdichterdrucks und
  Verwenden des kleineren Wertes von dem genannten Referenzladedruck und dem genannten Grenzladedruck als den Soll-Ladedruck;

  wobei
  im Fall von Pumpen der genannte Druckverhältnisoffset auf eine solche Weise aktualisiert wird, dass das genannte maximale Druckverhältnis verkleinert wird; und
  im Fall, dass der genannte Grenzladedruck als der genannte Soll-Ladedruck verwendet wird und während einer bestimmten Zeitspanne kein Pumpen erkannt wird, der genannte Druckverhältnisoffset auf eine solche Weise aktualisiert wird, dass das genannte maximale Druckverhältnis vergrößert wird.

10. Verfahren nach Anspruch 9, **dadurch gekennzeichnet, dass** jede Aktualisierung des genannten Druckverhältnisoffsets in der genannten Druckverhältnisoffsettabelle gespeichert wird.

11. Verfahren nach einem der vorhergehenden Ansprüche, **dadurch gekennzeichnet, dass** der genannte Parameter, der für den Luftdurchsatz durch den Verdichter repräsentativ ist, der Mengendurchsatz oder der korrigierte Mengendurchsatz von Luft durch den Verdichter oder die Motordrehzahl ist.

**Revendications**

1. Procédé pour commander la pression de suralimentation d'un moteur à combustion interne qui inclut un turbocompresseur à gaz d'échappement, ledit turbocompresseur comprenant une turbine reliée à un compresseur en communication avec un conduit d'admission d'air, dans lequel la sortie du compresseur est reliée à un collecteur d'admission d'air, ce dernier étant commandé de telle façon que le rapport de pression dans le compresseur dudit turbocompresseur à gaz d'échappement ne dépasse pas un rapport de pression maximum qui dépend d'un paramètre représentatif du débit d'air à travers le compresseur, ledit procédé comprenant les étapes consistant à :

  surveiller un paramètre influencé par une montée subite en pression de façon à détecter une montée subite en pression dans le compresseur ;
  dans le cas d'une montée subite en pression dans le compresseur, réduire la pression du collecteur d'admission pour supprimer la montée subite en pression ; et
  dans le cas où ledit compresseur fonctionne audit rapport de pression maximum et qu'aucune montée subite en pression n'est détectée pendant une période temporelle donnée, ledit rapport de pression maximum est augmenté.

2. Procédé selon la revendication 1, **caractérisé en ce que** la montée subite en pression du compresseur est détectée au moyen d'un processus qui comprend les opérations consistant à :

  a) mesurer un paramètre influencé par une montée subite en pression au moyen d'un capteur générant un premier signal ;
  b) traiter ledit premier signal pour obtenir un second signal qui comprend essentiellement les composants spécifiques à une montée subite en pression dans ledit premier signal ;
  c) conclure qu'il y a apparition d'une montée subite en pression dans le compresseur si l'amplitude dudit second signal excède un seuil prédéterminé.

3. Procédé selon la revendication 2, **caractérisé en ce que** ledit paramètre influencé par une montée subite en pression est le débit d'air admis.

**4.** Procédé selon la revendication 2, **caractérisé en ce que** ledit paramètre influencé par une montée subite en pression est la pression d'air dans ledit conduit d'admission d'air.

**5.** Procédé selon la revendication 2, 3 ou 4, **caractérisé en ce que** dans l'étape b) ledit premier signal est traité par un filtre passe-bande de manière à laisser passer à travers celui-ci uniquement les composantes de fréquence spécifiques à une montée subite en pression dans ledit premier signal.

**6.** Procédé selon la revendication 5, **caractérisé en ce que**, à l'étape b), ledit second signal est obtenu en normalisant ledit signal filtré.

**7.** Procédé selon la revendication 6, **caractérisé en ce que** ladite normalisation comprend de convertir ledit signal filtré en valeur absolue et de le faire ultérieurement passer à travers un filtre passe-bas.

**8.** Procédé selon l'une quelconque des revendications précédentes, **caractérisé en ce que** ledit rapport de pression maximum correspond à la somme d'un rapport de pression limite dépendant dudit paramètre représentatif du débit d'air et d'un décalage de rapport de pression dépendant dudit paramètre représentatif du débit d'air, ledit décalage de rapport de pression étant mis à jour de telle façon que l'on obtient une augmentation ou une diminution dudit rapport de pression maximum.

**9.** Procédé selon la revendication 8, **caractérisé en ce qu'**il comprend une régulation en boucle fermée ayant à titre de paramètres d'entrée la pression du collecteur d'admission et une pression de suralimentation désirée, et **en ce que** ledit procédé comprend les étapes consistant à :

lire une pression de suralimentation de référence à partir d'une carte de référence basée sur la vitesse moteur et sur la charge moteur ;
déterminer une pression en amont du compresseur et ledit paramètre représentatif du débit d'air à travers le compresseur ;
lire ledit rapport de pression de compresseur limite à partir d'une carte de rapport de pression limite en fonction dudit paramètre représentatif du débit d'air à travers le moteur et lire ledit décalage de rapport de pression à partir d'une table de décalage de rapport de pression en fonction dudit paramètre représentatif du débit d'air à travers le moteur, et calculer ledit rapport de pression maximum en ajoutant ledit rapport de pression limite audit décalage de rapport de pression ;

déterminer une pression de suralimentation maximum en se basant sur ledit rapport de pression maximum et sur ladite pression en amont du compresseur ; et
utiliser à titre de pression de suralimentation désirée la plus basse de ladite pression de suralimentation de référence et de ladite pression de suralimentation limite ;

dans lequel
dans le cas d'une montée subite en pression, ledit décalage de rapport de pression est mis à jour de telle façon que ledit rapport de pression maximum est diminué ; et
dans le cas où ladite pression de suralimentation limite est utilisée à titre de pression de suralimentation désirée et qu'aucune montée subite en pression n'est détectée pendant une période temporelle donnée, ledit décalage de rapport de pression est mis à jour de manière à augmenter ledit rapport de pression maximum.

**10.** Procédé selon la revendication 9, **caractérisé en ce que** chaque mise à jour dudit décalage de rapport de pression est stockée dans ladite table de décalage de rapport de pression.

**11.** Procédé selon l'une quelconque des revendications précédentes, **caractérisé en ce que** ledit paramètre représentatif du débit d'air à travers le compresseur est le débit massique ou le débit massique corrigé de l'air à travers le compresseur, ou la vitesse moteur.

Fig.1

MAF

Fig.2

Fig.3

Fig.4

Fig.5

Fig.6

Fig.7

**REFERENCES CITED IN THE DESCRIPTION**

**Patent documents cited in the description**

- EP 0685652 A
- JP 57052838 A
- JP 6323147 A
- US 6324848 B